# EUROPÄISCHE PATENTSCHRIFT

(11) **EP 0 428 834 B1**
(45) Veröffentlichungstag und Bekanntmachung des Hinweises auf die Patenterteilung: **13.04.1994**
(21) Anmeldenummer: 90115736.2
(22) Anmeldetag: 17.08.1990
(51) Int. Cl.: F16L 9/12, F16L 11/12

(54) **Durch Koextrusion hergestellte mehrschichtige Kraftfahrzeugrohrleitung aus Kunststoff**
Multilayered plastic lining for vehicle conduits fabricated by coextrusion
Conduite pour automobiles en matière plastique en plusieurs couches fabriquée par coextrusion

(30) Priorität: 20.11.1989 DE 3938497; 17.01.1990 DE 4001126
(43) Veröffentlichungstag der Anmeldung: 29.05.1991
(73) Patentinhaber: Technoflow Tube-Systems GmbH, 34277 Fuldabrück (DE)
(72) Erfinder: Brunnhofer, Erwin, D-3501 Fuldabrück 1 (DE)
(74) Vertreter: Andrejewski, Walter

(56) Entgegenhaltungen:
- DE-A- 3 820 447
- DE-C- 3 821 723
- DE-U- 8 008 440
- FR-A- 2 579 290

## Beschreibung

Die Erfindung betrifft eine durch Koextrusion hergestellte, mehrschichtige Kraftfahrzeugrohrleitung aus Kunststoff. Der Begriff Kraftfahrzeugrohrleitung umfaßt im Rahmen der Erfindung auch Schlauchleitungen. - Kraftfahrzeugrohrleitung bezeichnet die Tatsache, daß die Rohrleitung werkmäßig in einem Kraftfahrzeug installiert wird. Sie kann aber auch nachträglich im Wege der Wartung oder Reparatur eingebaut erden. Sie dient hauptsächlich der Führung des Kraftstoffes. Der Kraftstoff kann eine alkoholische Komponente aufweisen. Insoweit handelt es sich um eine Kraftfahrzeugrohrleitung, die insbes. für die Führung eines alkoholischen Mediums bestimmt ist. Der Begriff alkoholisches Medium bezeichnet in diesem Zusammenhang nich nur Kraftstoff mit Alkoholzusatz oder hauptsächlich aus Alkohol bestehenden Kraftstoff. Der Begriff alkoholisches Medium bezeichnet insoweit z. B. auch die Flüssigkeit einer Scheibenwaschanlage sowie das Druckmedium eines Bremsystems. Bekanntlich wird in Druckluft-Bremssysteme Alkohol eingeführt, um das Gefrieren von Kondensat zu verhindern. Alkohol meint im Rahmen der Erfindung insbes. Methylalkohol sowie Äthylalkohol und Mischungen davon mit Wasser, aber auch höherwertige Alkohole.

Die bekannte Kraftfahrzeugrohrleitung, von der die Erfindung ausgeht (DE 38 21 723), besteht aus einer rohrförmigen Außenschicht aus Polyamid 12. Sie bestimmt die Festigkeit der Kraftfahrzeuglohrleitung. Im übrigen ist eine rohrinnenseitig geschlossene Schutzschicht aus Polyamid 6 bzw. 6.6 bzw. 11 bzw. 12 vorgesehen, die über eine zwischengeschaltete Schicht an die Außenschicht aus polyamid 12 angeschlossen ist. Die zwischengeschaltete Schicht besteht aus einem Polyolefin. Die bekannte Kraftfahrzeugrohrleitung ist auch unter besonderen Betriebsbedingungen sicher und mit großer Standzeit, d. h. langzeitig, brauchbar. Besondere Betriebsbedingungen liegen vor, wenn das Medium, welches die Kraftfahrzeugrohrleitung führt, z. B. oberflächenaktive Substanzen aufweist oder Sauerstoff freisetzt. Das führt bei anderen als den vorstehend beschriebenen Kraftfahrzeugrohrleitungen (DE 38 21 723) häufig zu Spannungsrissen und störenden Oxidationen. Andererseits enthalten die Kunststoffe der bekannten Kraftfahrzeugrohrleitung in dem Kraftstoff lösliche Substanzen, z. B. Monomere oder Oligomere. Es kann dann vorkommen, daß der Kraftstoff aus der mehrschichtigen Wand der Kraftfahrzeugrohrleitung lösbare Bestandteile herauslöst. Das beeinträchtigt die Standzeit der bekannten Kraftfahrzeugrohrleitung kaum, stört jedoch aus anderen Gründen: Wenn ein Kraftfahrzeug nach der Erstbefüllung mit Kraftstoff längere zeit steht, beispielsweise verschifft wird oder Wochen und Monate auf die Auslieferung wartet, verändert sich in den Kraftstoffleitungen die Kraftstoffzusammensetzung. In dem Kraftstoff enthaltener Alkohol und Aromate diffundieren sehr viel schneller durch die mehrschichtige Rohrwand der Kraftfahrzeugrohrleitung als die aliphatischen Komponenten. Durch die Veränderung der Kraftstoffzusammensetzung verändern sich die Löslichkeitsgrenzen derjenigen Substanzen, die zuvor aus der mehrschichtigen Rohrwand herausgelöst sind. Insbes. die Monomere und Oligomere des Polyamid 11 bzw. des Polyamid 12 gelangen in diesem ruhenden Kraftstoff zur Kristallisation und damit zu Ausfällungen. Die Anwesenheit von Kupferionen beschleunigt dieses Kristallisationsverhalten in manchen Fällen zusätzlich. Kupferionen im Kraftstoff stammen z. B. aus Kollektorabrieb einer Benzinpumpe. Die ausgefällten Substanzen können zu Filterverstopfungen führen, sammeln sich möglicherweise im Bewegungsraum des Schwimmers des Vergasers und behindern die Schwimmerbewegung oder verstopfen bei Einspritzmotoren die Einspritzdüsen. Auch können sich Beläge auf Steuerkanten der Einspritzpumpen bilden.

Der Erfindung liegt die Aufgabe zugrunde, eine durch Koextrusion hergestellte mehrschichtige Kraftfahrzeugrohrleitung aus Kunststoff zu schaffen, bei der die lösbaren Substanzen in den eingesetzten Kunststoffen in dem Medium, welches die Kraftfahrzeugrohrleitung führt, insbes. in dem Kraftstoff, nicht mehr in Lösung gehen.

Zur Lösung dieser Aufgabe ist Gegenstand der Erfindung eine durch Koextrusion hergestellte mehrschichtige Kraftfahrzeugrohrleitung aus Kunststoff, bestehend aus einer rohrförmigen Außenschicht aus Polyamid 11 oder 12, welche die Festigkeit der Kraftfahrzeugrohrleitung bestimmt, und einer gegenüber der Außenschicht dünneren Lösungsinhibitorschicht aus einem Copolymer aus Äthylen und Vinylalkohol, wobei eine dünne Haftvermittlerschicht aus Polyäthylen oder Polypropylen zwischengeschaltet ist. Für die Außenschicht ist im allgemeinen eine Dicke von 0,2 bis 0,7 mm ausreichend. Nach bevorzugter Ausführungsform der Erfindung weist die Lösungsinhibitorschicht einen Äthylenanteil von 30 bis 45 Masse% auf. Die Lösungsinhibitorschicht hat zweckmäßigerweise eine Dicke von 0,1 bis 0,2 mm. Auch die Haftvermittlung kommt es an. Insoweit ist eine bevorzugte Ausführungsform der Erfindung dadurch ausgezeichnet, daß die Haftvermittlerschicht aktive Seitenketten aus Maleinsäureanhydrit und eine Dicke von 0,05 bis 0,2 mm besitzt.

Die erreichten Vorteile sind darin zu sehen, daß bei der erfindungsgemäßen Kraftfahrzeugrohrleitung die lösbaren Substanzen der eingesetzten Kunststoffe in dem medium, welches in der Kraftfahrzeugrohrleitung geführt wird, insbes. in dem Kraftstoff, nicht mehr in Lösung gehen. Das beruht darauf, daß die innenliegende medienberührende Schicht aus einem speziellen Werkstoff besteht, der keine auslösbaren Substanzen enthält.

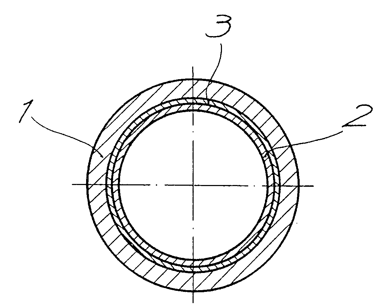

Im folgenden wird die Erfindung anhand eines Ausführungsbeispiels erläutert. Die Figur des Ausführungsbeispiels zeigt einen Querschnitt durch eine erf indungsgemäße Kraftfahrzeugrohrleitung.

Die im Ausführungsbeispiel dargestellte und behandelte Kraftfahrzeugrohrleitung wurde durch Koextrusion hergestellt und besteht aus drei Schichten aus Kunststoff. Zunächst ist eine rohrförmige Außenschicht 1 aus Polyamid 11 oder 12 vorgesehen, die die Festigkeit der Kraftfahrzeugrohrleitung bestimmt. Im übrigen ist eine gegenüber der Außenschicht 1 dünnere Lösungsinhibitorschicht 2 aus einem Copolymer aus Äthylen und Vinylalkohol vorgesehen. Eine dünne Haftvermittlerschicht 3 ist zwischengeschaltet. Die Außenschicht 1 mag eine Dicke von 0,2 bis 0,7 mm aufweisen. Sie kann auch schlauchförmig eingestellt sein. Die Lösungsinhibitorschicht 2 aus Polyvinylalkohol besitzt einen Äthylenanteil von 30 bis 45 Masse% und eine Dicke von 0,1 bis 0,2 mm. Sie ist in der Zeichnung übertrieben dick gezeichnet. Die Haftvermittlerschicht 3 besitzt aktive Seitenketten aus Maleinsäureanhydrit und eine Dicke von lediglich 0,05 bis 0,2 mm. Sie wurde ebenfalls übertrieben dick dargestellt. - Die Lösungsinhibitorschicht 2 kann auch aus Polyvinylalkohol-Äthylencopolymer mit schlagzäh machenden Zusätzen bestehen.

## Patentansprüche

1. Durch Koextrusion hergestellte, mehrschichtige Kraftfahrzeugrohrleitung aus Kunststoff, bestehend aus
einer rohrförmigen Außenschicht aus Polyamid 11 oder 12, welche die Festigkeit der Kraftfahrzeugrohrleitung bestimmt, und einer gegenüber der Außenschicht dünneren Lösungsinhibitorschicht aus einem Copolymer aus Äthylen und Vinylalkohol,
wobei eine dünne Haftvermittlerschicht aus Polyäthylen oder Polypropylen zwischengeschaltet ist.

2. Kraftfahrzeugrohrleitung nach Anspruch 1, wobei die Außenschicht eine Dicke von 0,2 bis 0,7 mm besitzt.

3. Kraftfahrzeugrohrleitung nach einem der Ansprüche 1 oder 2, wobei die Lösungsinhibitorschicht einen Äthylenanteil von 30 bis Masse% aufweist.

4. Kraftfahrzeugrohrleitung nach Anspruch 3, wobei die Lösungsinhibitorschicht eine Dicke von 0,1 bis 0,2 mm besitzt.

5. Kraftfahrzeugrohrleitung nach einem der Ansprüche 1 bis 4, wobei die Haftvermittlerschicht aktive Seitenketten aus Maleinsäureanhydrit und eine Dicke von 0,05 bis 0,2 mm besitzt.

## Claims

1. A multilayer motor vehicle pipeline made of plastics material and manufactured by co-extrusion, consisting of
a tubular outer layer of polyamide 11 or 12, which determines the strength of the motor vehicle pipeline, and
a solution inhibitor layer which is thinner than the outer layer and which is made from a copolymer of ethylene and vinyl alcohol, wherein a thin bonding agent layer of polyethylene or polypropylene is interposed therebetween.

2. A motor vehicle pipeline according to claim 1, wherein the outer layer has a thickness of 0.2 to 0.7 mm.

3. A motor vehicle pipeline according to one of claims 1 or 2, wherein the solution inhibitor layer has an ethylene content of 30 to 45 weight %.

4. A motor vehicle pipeline according to claim 3, wherein the solution inhibitor layer has a thickness of 0.1 to 0.2 mm.

5. A motor vehicle pipeline according to any one of claims 1 to 4, wherein the bonding agent layer has active side chains of maleic anhydride and a thickness of 0.05 to 0.2 mm.

## Revendications

1. Conduite tubulaire pour véhicule automobile, à plusieurs couches, réalisée par coextrusion, constituée d'une couche extérieure tubulaire en polyamide 11 ou 12 qui détermine la résistance de la conduite tubulaire pour véhicule automobile et une couche d'inhibiteur de dissolution, plus mince que la couche extérieure, une couche mince d'agent d'adhésion en polyéthylène ou polypropylène étant interposée.

2. Conduite tubulaire pour véhicule automobile, selon la revendication 1 dans laquelle la couche extérieure présente une épaisseur de 0,2 à 0,7 mm.

3. Conduite tubulaire pour véhicule automobile, selon l'une des revendications 1 ou 2, dans laquelle la couche d'inhibiteur de dissolution présente une proportion d'éthylène de 30 à 45 % en masse.

4. Conduite tubulaire pour véhicule automobile, selon la revendication 3 dans laquelle la couche d'inhibiteur de dissolution présente une épaisseur de 0,1 à 0,2 mm.

5. Conduite tubulaire pour véhicule automobile, selon l'une des revendications 1 à 4, dans laquelle la couche d'agent d'adhésion possède des chaînes latérales actives d'anhydride d'acide maléique et une épaisseur de 0,05 à 0,2 mm.
